# EUROPÄISCHE PATENTSCHRIFT

(11) **EP 4 267 931 B1**
(45) Veröffentlichungstag und Bekanntmachung des Hinweises auf die Patenterteilung: **12.11.2025**
(21) Anmeldenummer: 21836318.2
(22) Anmeldetag: 22.12.2021
(51) Int. Cl.: G01M 17/06

(54) **VERFAHREN ZUM DURCHFÜHREN EINER TESTFAHRT MIT ZUMINDEST EINEM TESTFAHRZEUG**
METHOD FOR EXECUTING A TEST DRIVE WITH AT LEAST ONE TEST VEHICLE
PROCÉDÉ D'EXÉCUTION D'UN ESSAI DE CONDUITE SUR AU MOINS UN VÉHICULE D'ESSAI

(30) Priorität: 23.12.2020 AT 511342020
(43) Veröffentlichungstag der Anmeldung: 01.11.2023
(73) Patentinhaber: AVL List GmbH, 8020 Graz (AT)
(72) Erfinder: QUINZ, Philipp, 8020 Graz (AT); HOLLANDER, Marijn, 8043 Graz (AT); VÖGL, Rainer, 8062 Kumberg (AT)
(74) Vertreter: Patentanwälte Pinter & Weiss OG
(86) Internationale Anmeldenummer: PCT/AT2021/060484
(87) Internationale Veröffentlichungsnummer: WO 2022/133510

(56) Entgegenhaltungen:
- EP-A1- 2 088 439
- CN-A- 104 296 998
- DE-A1- 102006 021 357

## Beschreibung

Die gegenständliche Erfindung betrifft eine Verfahren zum Durchführen einer Testfahrt mit zumindest einem Testfahrzeug, wobei das Testfahrzeug von einem Testfahrer entlang einer Fahrstrecke bewegt wird, wobei eine Mehrzahl von Testfällen in einer Speichereinheit gespeichert werden und jeder Testfall als Abfolge von Testschritten definiert wird, die beim Ausführen des Testfalls vom Testfahrer durchzuführen sind, und zumindest einer dieser gespeicherten Testfälle während der Testfahrt vom Testfahrer absolviert wird. Die Erfindung betrifft auch eine Anordnung zur Durchführung einer solchen Testfahrt.

Obwohl bei der Entwicklung von Fahrzeugen in verschiedenen Entwicklungsstufen Tests am Fahrzeug oder an Komponenten des Fahrzeugs auf Prüfständen durchgeführt werden, spielen auch reale Testfahrten mit dem Fahrzeug auf Straßen nachwievor eine wichtige Rolle. Solche Testfahrten kommen vor allem in späten Entwicklungsstadien und für bestimmte Tests, die auf Prüfständen nicht oder nicht zufriedenstellend durchgeführt werden können, zum Einsatz. Ein Beispiel dafür sind Tests im Zusammenhang mit modernen Fahrzeugassistenzsystemen. Fahrzeugassistenzsysteme greifen teilautonom oder autonom in Antrieb, Steuerung oder Signalisierungseinrichtungen des Fahrzeuges ein, um gefährliche Situation zu vermeiden oder abzumildern, oder warnen durch geeignete Mensch-Maschine-Schnittstellen den Fahrer vor solchen kritischen Situationen. In heutigen Fahrzeugen sind üblicherweise eine Fülle von Fahrzeugsensoren, sowohl Fahrzustandssensoren als auch Umfeldsensoren, verbaut, die einen bestimmten Fahrzustand und/oder die Umgebung des Fahrzeugs erfassen. Ein Fahrzustandssensor erfasst beispielsweise die Fahrdynamik des Fahrzeugs, z.B. Fahrgeschwindigkeit, Beschleunigungen, Gierraten, Raddrehzahlen usw., oder Antriebswerte, z.B. Motordrehzahl, Antriebsmoment (auch an verschiedenen Stellen des Antriebsstrangs). Umfeldsensoren erfassen innerhalb des Erfassungsbereichs der Sensoren die Umgebung des Fahrzeugs. Beispiele für Umfeldsensoren sind ein Ultraschallsensor, Radar, Lidar, Kamera, Regensensor, Lichtsensor, Infrarotsensor usw.

Die erfassten Sensorsignale der Fahrzeugsensoren werden in Fahrzeugassistenzsystemen und anderen Steuergeräten des Fahrzeugs verarbeitet. Die Sensorsignale können von einem Fahrzeugsensor auch über einen Fahrzeugbus gesendet werden und vom Fahrzeugbus gelesen werden, z.B. durch ein Steuergerät oder Fahrzeugassistenzsystem. Beispiele für Fahrzeugassistenzsysteme, die Umfeldsensoren (und gegebenenfalls auch Fahrzustandssensoren) verwenden, sind Einparkhilfe, Spurwechselassistent, automatischer Abstandswarner, Tempomat, Adaptive Geschwindigkeitsregelung, Totwinkel-Überwachung, Spurverlassenswarnung, Verkehrszeichenerkennung, Notbremsassistent, Notbremssystem zum Fußgängerschutz usw. Beispiele für Fahrzeugassistenzsysteme, die Fahrzustandssensoren verwenden, sind Antiblockiersystem, Fahrdynamikregelung, Traktionskontrolle usw. Der Test solcher Fahrzeugassistenzsysteme ist in der Praxis durchaus komplex.

Für Tests von Fahrzeugassistenzsystemen müssen mit einem Testfahrzeug Testsituationen erzeugt werden, die ein Ansprechen eines bestimmten Fahrzeugassistenzsystems zur Folge haben. Hierfür werden oftmals mehrere Testfahrzeuge auf einer Teststrecke verwendet, die von Testfahrern gesteuert werden, sodass bestimmte Verkehrssituationen, die ein Ansprechen eines Fahrzeugassistenzsystems bewirken, provoziert werden. Das ist ein sehr aufwendiger und teurer Vorgang, weil hierfür erfahrene Testfahrer benötigt werden und eine Teststrecke für eine lange Zeitspanne benötigt wird. Während der Durchführung der Tests werden bestimmte Fahrzeugsignale aufgezeichnet und ausgewertet (online oder offline). Oftmals können die Fahrzeugsignale erst offline nach der Durchführung der Testfahrt ausgewertet werden und geprüft werden, ob ein Test überhaupt richtig durchgeführt und erfolgreich absolviert wurde.

Es sind aber auch andere Tests an Fahrzeugen abseits von Fahrzeugassistenzsystemen denkbar, die von bestimmten Fahrzuständen und/oder Umgebungszuständen in der Umgebung des Fahrzeugs abhängen. Ein Beispiel könnte sein, das Testen der Abgasemissionen beim Anfahren des Fahrzeugs aus dem Stand oder bei einer Bergauffahrt, oder das Testen einer elektrischen Antriebsbatterie in bestimmten Fahrzuständen oder Umgebungsumständen.

Um einen Fahrer bei der Durchführung von Testfahrten mit einem Testfahrzeug zu unterstützen sind bereits Systeme bekannt geworden, die dem Fahrer während der Fahrt Fahranweisungen geben, um einen bestimmten Testfall zu absolvieren. Dazu wählt der Fahrer einen bestimmten Testfall bestehend aus definierten Testschritten aus einer Menge an vorhandenen Testfällen aus. Nach dem Starten des ausgewählten Testfalls, werden die Testschritte des Testfalls dem Fahrer vorgegeben, der diese Testschritte mit dem Fahrzeug umsetzt. Solche Systeme finden sich beispielsweise in der EP 2 088 439 A1, US 2010/0079301 A1 oder EP 3 644 148 A1. Die Umsetzung eines solchen Tests im realen Straßenverkehr ist damit aber schwierig, weil die Umgebung des Fahrzeugs, insbesondere die Verkehrssituation, während der Durchführung des Tests nicht kontrolliert werden kann, oder durch ein anderes Testfahrzeug aufwendig simuliert werden muss. Damit sind insbesondere Tests von Fahrzeugassistenzsystemen schwierig oder gar nicht realisierbar.

In der DE 10 2006 021 357 A1 erhält der Fahrer Fahranweisungen anhand einer aktuellen Position des Fahrzeugs, die beispielsweise mittels GPS ermittelt wird. Damit soll es möglich sein, einen Testlauf besser reproduzieren zu können, da der Fahrer an derselben Position dieselbe Fahranweisung erhält. Bestimmte Tests, insbesondere solche, die die Umgebung des Fahrzeugs berücksichtigen wie im Zusammenhang mit Fahrzeugassistenzsystemen, lassen sich damit aber nicht realisieren.

Es ist eine Aufgabe der gegenständlichen Erfindung die Durchführung von Testfahrten mit einem Testfahrzeug, das von einem Testfahrer zum Absolvieren eines Testfalls gesteuert wird, zu vereinfachen.

Diese Aufgabe wird mit den Merkmalen der unabhängigen Ansprüche gelöst. Das erfindungsgemäße Vorgehen ermöglicht es, während einer Testfahrt aufgrund eines Sensorsignals eines Fahrzeugsensors zu erkennen, ob ein gespeicherter Testfall möglich ist. Falls ein Testfall möglich ist, wird der Testfall gestartet und die mit dem Testfall gespeicherten Testschritte werden dem Testfahrer zur Wahrnehmung (akustisch, optisch, taktil) vermittelt, der diese dann durchführen kann. Der Testfahrer muss sich damit nicht darum kümmern, ob eine Startbedingung eines Testfalles erfüllt wird, sondern kann einfach die Testfahrt durchführen, bis eine Startbedingung erfüllt ist. Insbesondere lassen sich damit während der Testfahrt sehr einfach Testfälle erkennen, für die ein anderer Verkehrsteilnehmer notwendig ist, ohne diesen anderen Verkehrsteilnehmer durch ein zweites Testfahrzeug im Zuge der Durchführung des Tests simulieren zu müssen. Stattdessen wird der reale Straßenverkehr verwendet und geprüft, ob sich dabei aufgrund der aktuellen Verkehrssituation, die beispielsweise über einen Umfeldsensor erfasst werden kann, und/oder aufgrund eines aktuellen Fahrzustandes, der beispielsweise über einen Fahrzustandssensor erfasst werden kann, ein bestimmter Testfall ergibt, der ausgeführt werden kann. Die Auswahl der Testfälle kann damit erheblich vereinfacht werden.

Vorteilhaft liest die Testeinheit die Startbedingungen mehrerer gespeicherter Testfälle aus der Speichereinheit aus und prüft während der Testfahrt, ob einer der zu den ausgelesenen als Startbedingungen gespeicherten Fahrzeugzustände und der durch das Sensorsignal repräsentierte aktuelle Fahrzeugzustand übereinstimmen. Bei Übereinstimmung absolviert der Testfahrer den dieser Startbedingung zugeordneten Testfall, indem dieser Testfall gestartet wird und dem Testfahrer die in diesem Testfall definierten Testschritte zur Wahrnehmung vermittelt werden und der Testfahrer diese Testschritte ausführt. Auf diese Weise können gleichzeitig mehrere Testfälle auf ihre Startbedingung hin überwacht werden. Sobald eine Startbedingung erfüllt wird, kann dieser Testfall durchgeführt werden.

Dabei kann der Testfall automatisch von der Testeinheit gestartet werden, was eine besonders einfache Durchführung der Testfahrt ermöglicht. Alternativ kann der Testfall dem Testfahrer von der Testeinheit zur Durchführung vorgeschlagen werden und der Testfahrer den Testfall startet. Das ist auch möglich, wenn mehrere Testfälle gleichzeitig von der Testeinheit mittels den zugeordneten Startbedingungen auf ihr Eintreten überwacht werden. In diesem Fall erhält der Testfahrer die Information vorzugsweise über die Nutzerschnittstelle und kann selbst entscheiden, ob er den möglichen Testfall ausführen möchte oder nicht. Damit hat der Testfahrer mehr Kontroller über die Testfahrt. Es sind natürlich auch Kombination dieser beiden Möglichkeiten denkbar. Beispielsweise können bestimmte Testfälle automatisch gestartet werden und andere werden dem Testfahrer vorgeschlagen, was in der Testeinheit konfiguriert sein kann.

Vorteilhaft wird ein absolvierter Testfall nach der Absolvierung oder nach einer vorgegebenen mehrfachen Absolvierung aus der Mehrzahl von Testfällen in der Speichereinheit gestrichen. Damit reduziert sich der Aufwand für die Testeinheit Testfälle zu erkennen. Gleichzeitig kann damit dem Testfahrer aber auch angezeigt werden, welche Testfälle noch nicht absolviert wurden und der Testfahrer kann das Testfahrzeug in eine solche Umgebung steuern, wo solche noch nicht absolvierten Testfälle auftreten, oder der Testfahrer kann das Testfahrzeug in einen Fahrzeugzustand bringen, in dem solche Testfälle auftreten. Diese Information der Umgebung oder des Fahrzeugzustandes kann dem Testfahrer auch von der Testeinheit vorgeschlagen werden, beispielsweise über die Nutzerschnittstelle.

Die Testeinheit kann auch in einer Testzentrale, die mit dem Fahrzeug in Datenverbindung steht, angeordnet werden. Das ermöglicht es, die Auswertung der Testfälle in der Testzentrale durchzuführen. Das ermöglicht es aber auch, Testfahrten gemäß der Erfindung mit mehreren Testfahrzeugen gleichzeitig durchzuführen, indem weitere Testfahrzeug von einem weiteren Testfahrer entlang einer Fahrstrecke bewegt werden und die weiteren Testfahrzeug in Datenverbindung mit der Testeinheit der Testzentrale stehen. Die Testeinheit in der Testzentrale überwacht über die gespeicherten Startbedingungen, ob mit einem der Testfahrzeuge ein Testfall möglich ist. Dieser Testfall kann dann mit diesem Testfahrzeug durchgeführt werden. Das Vorgehen dazu ist wie oben oder in den Ansprüchen beschrieben. Das ermöglicht das Betreiben einer Testflotte bestehend aus mehrere Testfahrzeugen. Damit kann die Zeit zur Durchführung einer Testfahrt mit einer Vielzahl von Testfällen deutlich reduziert werden. Die Testzentrale kann die Testfahrzeuge, oder deren Testfahrer, auch gezielt instruieren, um bestimmte Fahrumgebungen aufzusuchen oder Fahrzeugzustände herzustellen, um die Testabdeckung mit Testfällen gezielt zu steuern und unnütze wiederholte Durchführung von Testfällen zu verhindern.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1 ein Testfahrzeug mit Fahrzeugsensoren,
Fig.2 den Aufbau eines Testfalles mit Fahranweisungen,
Fig.3 eine Durchführung einer Testfahrt gemäß der Erfindung,
Fig.4 und 5 ein Beispiel eines möglichen Testfalles und
Fig.6 eine Ausführung mit einer Testzentrale und mehreren damit verbundenen Testfahrzeugen, die jeweils eine Testfahrt nach der Erfindung ausführen.

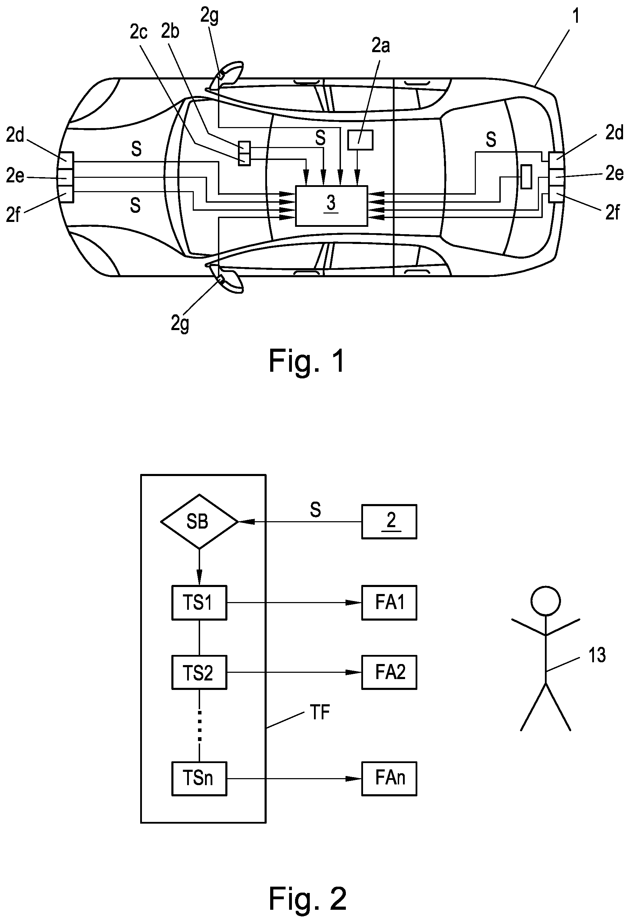

Fig.1 zeigt beispielhaft ein Fahrzeug 1 mit verschiedenen Fahrzeugsensoren 2. Zur Veranschaulichung werden die Fahrzeugsensoren 2 ohne Einschränkung der Allgemeinheit in Fig.1 mit einen Zusatzbuchstaben gekennzeichnet, in der nachfolgenden Beschreibung aber nur auf Fahrzeugsensoren 2 verwiesen, sofern keine Unterscheidung erforderlich ist. Fahrzeugsensor 2a ist z.B. ein Beschleunigungssensor zum Erfassen der Fahrdynamik (Längsbeschleunigung, Querbeschleunigung, Hubbeschleunigung, Wankrate, Nickrate und/oder Gierrate) des Fahrzeugs 1. Zum Erfassen des Fahrzustandes können auch noch weitere Fahrzeugsensoren 2 vorgesehen sein, wie Drehzahlsensoren oder Drehmomentensensoren am Antriebsstrang und/oder am Rad usw. Solche Sensoren erfassen einen Fahrzustand des Fahrzeugs 1. Der Fahrzeugsensor 2b ist beispielsweise eine Stereokamera, 2c ein Regensensor, 2d ein Radarsensor (vorne und hinten), 2e ein Lidarsensor (vorne und hinten), 2f ein Ultraschallsensor (vorne und hinten) und 2g ein Ultraschallsensor (links und rechts). Ebenso können Fahrzeugsensoren 2 zur Erfassung von Fußgängern, des Straßentyps (Autobahn, Landstraße, Stadt) oder der Straßentopologie (Steigung, Neigung, Kurve) (beides z.B. per GPS und digitalen Kartendaten), Verkehrszeichen usw. vorgesehen sein. Solche Sensoren erfassen die Umgebung des Fahrzeugs 1. Ein Fahrzeug 1 kann aber natürlich auch weniger, zusätzliche oder andere Fahrzeugsensoren 2 als in Fig.1 beispielhaft dargestellt aufweisen. Für die Erfindung kommt es nicht auf die Konfiguration des Fahrzeugs 1 mit Fahrzeugsensoren 2 an, sondern es ist lediglich entscheidend, dass das Fahrzeug 1 über zumindest einen Fahrzeugsensor 2 verfügt, der ein Sensorsignal S bereitstellt. Das Sensorsignal S repräsentiert die gemessene Größe und kann in beliebiger Form liegen, z.B. digital oder analog, verschiedener Sensorwertbereich usw.

Die Sensorsignale S der Fahrzeugsensoren 2 werden an ein Steuergerät 3 gesendet, wo die Sensorsignale S ausgewertet werden. Das Steuergerät 3 kann dann über Fahrzeugaktuatoren (in Fig.1 aus Gründen der Übersichtlichkeit nicht dargestellt) bestimmte Handlungen setzen. Die Fahrzeugaktuatoren wirken beispielsweise auf die Fahrzeugbremse, die Fahrzeuglenkung, den Fahrzeugantrieb, das Fahrzeuglicht, den Scheibenwischer oder bilden eine Signalisierungseinrichtung (optisch, akustisch, taktil) für den Fahrer. Daneben sind natürlich auch noch andere Fahrzeugaktuatoren, die auf das Fahrzeug 1 oder den Fahrer des Fahrzeugs 1 einwirken, möglich. Für die Erfindung kommt es nicht auf die Konfiguration des Fahrzeugs 1 mit Fahrzeugaktuatoren an.

Die Sensorsignale S der vorhandenen Fahrzeugsensoren 2 können direkt an ein Steuergerät 3 übermittelt werden, oder über einen Fahrzeugbus. Auch gemischte Übermittlungen sind denkbar. In Fig.1 ist ein einziges Steuergerät 3 dargestellt. Üblicherweise sind aber in einem Fahrzeug eine Vielzahl von Steuergeräten vorgesehen, die jeweils verschiedene Aufgaben haben und die auch zusammenwirken können, beispielsweise ein Steuergerät zur Traktionskontrolle und ein Bremsensteuergerät. Das Steuergerät 3 in Fig.1 steht damit symbolisch für ein oder mehrere Steuergeräte. Ein Steuergerät 3 ist üblicherweise als Mikrocontroller ausgeführt mit entsprechender, darauf installierter und ausgeführter Steuersoftware. Auch die konkrete Konfiguration der Steuergeräte 3 ist für die Erfindung unerheblich.

Mit dem Testfahrzeug 1 soll ein Testfahrer 13 eine Testfahrt auf einer Fahrstrecke, beispielsweise eine Straße (Stadt, Land, Autobahn) oder eine Teststrecke auf einem Testgelände, absolvieren und dabei zumindest einen vorgegebenen Testfall TF durchführen. Ein Testfall TF besteht aus einer Mehrzahl n>1 von definierten, aufeinanderfolgenden Testschritten TSn, die nach den Vorgaben des Testfalls TF abzuarbeiten sind, wie in Fig.2 angedeutet. Die Testschritte TSn müssen dabei nicht zwingend in Serie vorgesehen sein, wie in Fig.2 dargestellt, sondern es könnten auch über definierte Abfragen von Bedingungen mehrere Zweige, jeweils mit einer Anzahl von nacheinander auszuführenden Testschritten, vorgesehen sein. Jeder Testschritt TSn enthält eine definierte Fahranweisung FAn für den Testfahrer 13, die der Testfahrer 13 am oder mit dem Testfahrzeug 1 umzusetzen hat. Eine Fahranweisung FAn kann beispielsweise die Anweisung sein, die Geschwindigkeit auf einen Zielwert zu erhöhen oder zu verringern, einen anderen Gang einzulegen, eine Fahrspur zu wechseln, eine Lenkbewegung auszuführen, eine bestimmte Fahrzeugfunktion zu aktivieren oder zu deaktivieren usw. Eine Fahranweisung FAn kann auch mehrere Teilanweisungen enthalten, beispielsweise Beschleunigen auf Zielgeschwindigkeit und Fahrspurwechsel.

Zwischen einzelnen Testschritten TSn kann eine definierte Zeitspanne vorgesehen sein. Der nächste Testschritt TSn kann aber auch erst dann angezeigt werden, wenn der vorherige Testschritt TSn-1, oder eine andere definierte Bedingung, abgeschlossen wurde. Die definierte Bedingung kann ein bestimmter Fahrzeugzustand sein, beispielsweise das Erreichen einer bestimmten Geschwindigkeit, und/oder ein bestimmter Umgebungszustand des Testfahrzeugs 1, beispielsweise ein Abstand zu einem vorausfahrenden Fahrzeug. Der Fahrzeugzustand und/oder der Umgebungszustand kann durch den zumindest einen Fahrzeugsensor 2 erfasst werden. Wird ein Testschritt TSn nicht abgeschlossen, dann kann die Ausführung des Testfalls TF abgebrochen werden, oder versucht werden, den Testschritt TSn zu wiederholen. Ein Testschritt TSn ist beispielsweise nicht abgeschlossen, wenn eine bestimmte Bedingung für den nächsten Testschritt TSn+1 nicht erreicht wird oder wenn der nächste Testschritt TSn+1 nicht innerhalb einer bestimmten Zeitspanne beginnt.

Mit einem Testfall TF kann somit ein bestimmtes Fahrmanöver abgebildet werden, das vom Testfahrer 13 auszuführen ist. Ein Fahrmanöver kann beispielsweise ein Überholmanöver eines anderen Fahrzeugs sein, eine Annäherung an ein vorausfahrendes Fahrzeug, ein bestimmtes Geschwindigkeitsprofil des Fahrzeugs, eine Fahrt durch eine Kreuzung mit Ampel usw. Hier sind keinerlei Grenzen gesetzt und jegliches denkbare Fahrmanöver eines Testfahrzeugs 1 könnte mit einem Testfall TF abgebildet werden.

Während der Abarbeitung eines Testfalls TF wird mit zumindest einem Fahrzeugsensor 2 zumindest ein Sensorsignal S erfasst, üblicherweise auch gespeichert, und für den durchzuführenden Test ausgewertet. Die Auswertung kann online während der Testfahrt erfolgen und das Ergebnis der Auswertung kann dem Testfahrer 13 während der Testfahrt auch angezeigt werden. Damit erhält der Testfahrer 13 Rückmeldung, ob der Testfall erfolgreich absolviert wurde. Das zumindest eine Sensorsignal S kann aber auch für eine spätere offline Auswertung gespeichert werden.

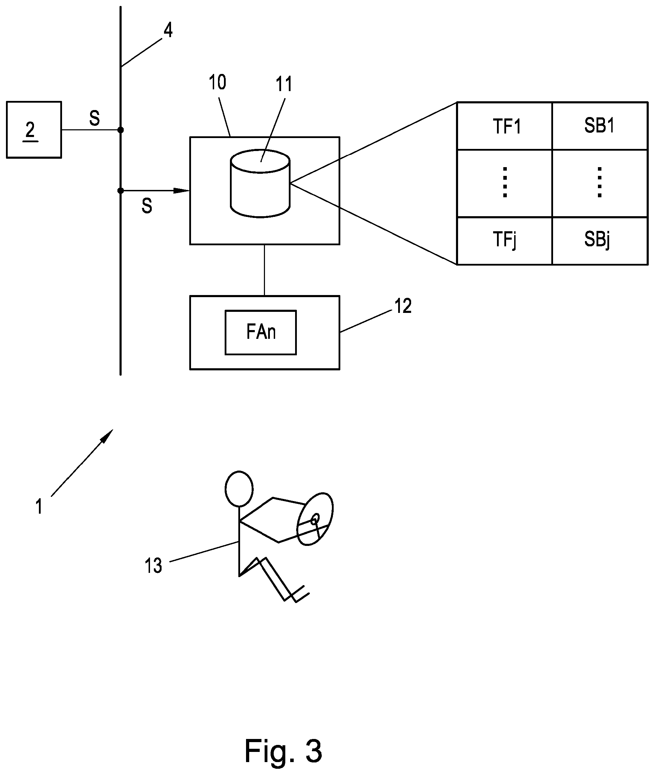

Für die Testfahrt ist eine Anzahl j ≥ 1 von Testfällen TFj definiert, die auszuführen ist. Üblicherweise gibt es eine Vielzahl von verschiedenen Testfällen TFj, die zu absolvieren sind. Um den Testfahrer 13 bei der Absolvierung zumindest eines Testfalls TF zu unterstützen und um Testfälle mit verschiedenen Verkehrssituationen im Umfeld des Testfahrzeugs 1 einfacher absolvieren zu können, wird erfindungsgemäß mit Bezugnahme auf Fig. 2 und 3 wie folgt vorgegangen.

Für jeden gespeicherten Testfall TFj wird eine Startbedingung SBj definiert. Die Startbedingung SBj definiert einen bestimmten vorgegebenen Fahrzeugzustand, also ein Fahrzustand und/oder Umgebungszustand, des Testfahrzeugs 1, der durch zumindest ein Sensorsignal S definiert wird. Ob eine der Startbedindungen SBj einem aktuellen Fahrzeugzustand entspricht, ist anhand des zumindest einen Sensorsignals S feststellbar.

Im Testfahrzeug 1 ist eine Testeinheit 10 vorgesehen (Fig.3). Die Testeinheit 10 kann als prozessorbasiert Hardware ausgeführt sein, beispielsweise als Computer, Mikrocontroller, Smartphone, Tabletcomputer usw., auf der Testsoftware installiert ist, die auf der Hardware ausgeführt wird. Die Testeinheit 10 verfügt über einen Speicher 11, der in der Testeinheit 10 integriert oder extern sein kann. Im Speicher 11 sind die möglichen Testfälle TFj jeweils mit der zugeordneten Startbedingung SBj gespeichert. Die Testeinheit 10 erhält das zumindest eine Sensorsignal S von dem zumindest einen Fahrzeugsensor 2. Dazu kann die Testeinheit 10 direkt mit einem Fahrzeugsensor 2 verbunden sein, oder die Testeinheit 10 erhält das Sensorsignal S von einem Steuergerät 3 des Testfahrzeugs 1, oder die Testeinheit 10 ist mit einem Fahrzeugbus 4 des Testfahrzeugs 1, über den das Sensorsignal S übertragen wird, verbunden (wie in Fig.3 angedeutet) und liest das Sensorsignal S vom Fahrzeugbus 4 aus. Natürlich können Sensorsignale S verschiedener Fahrzeugsensoren 2 auf verschiedene Weise an die Testeinheit 10 übermittelt werden. Daneben kann es auch noch andere Methoden der Übermittlung eines Sensorsignal S geben. Die konkrete Art der Übermittlung des Sensorsignals S an die Testeinheit 10 ist für die Erfindung unerheblich.

Während der Fahrt des Testfahrzeugs 1 überprüft die Testeinheit 10 anhand des übermittelten zumindest einen Sensorsignals S laufend (üblicherweise in vorgegebenen Zeitschritten), ob ein aktueller, durch das Sensorsignal S repräsentierter Fahrzeugzustand einer Startbedingung SBj eines der gespeicherten Testfälle TFj entspricht.

Falls die Startbedingung SBj einem aktuellen Fahrzeugzustand entspricht, kann die Testeinheit 10 dem Testfahrer 13 diesen Umstand an einer Nutzerschnittstelle 12 anzeigen. Der Testfahrer 13 kann dann die Ausführung dieses Testfalls TFj starten, beispielsweise über die Nutzerschnittstelle 12 der Testeinheit 10. Die Nutzerschnittstelle 12 kann optische, akustisch und/oder taktile Ein- und Ausgabeeinheiten aufweisen und kann auch mehrere Komponenten zur Ein- und Ausgabe umfassen. Eine mögliche Ausführung der Nutzerschnittstelle 12 ist in Form eines Touchscreens mit Lautsprecher und Mikrofon (z.B. wie bei einem Tabletcomputer). Eine andere mögliche Ausführung ist in Form einer Spracheingabe und Sprachausgabe. Ebenso sind natürlich noch beliebig andere Ausführungen denkbar, beispielsweise mit Anzeigen, Tasten, Knöpfen, Drehknöpfe, Tastatur, Maus, Joystick usw. Wenn eine Startbedingung SBj einem aktuellen Fahrzeugzustand entspricht, kann die Testeinheit 10 den der Startbedingung SBj zugeordneten Testfall TFj aber auch automatisch starten und das dem Fahrer über die Nutzerschnittstelle 12 anzeigen. Wurde ein Testfall TFj gestartet, erhält der Testfahrer 13 dann die Fahranweisungen FAnj der Testschritte TSnj zum Testfall TFj, vorzugsweise über die Nutzerschnittstelle 12, und kann dann den Test gemäß den Vorgaben des Testfalls TFj absolvieren. Die Testschritte TSnj, konkret die Fahranweisungen FAnj der Testschritte TSnj, werden dem Testfahrer zur optischen, akustischen oder taktilen Wahrnehmung vermittelt.

Wenn, wie üblich, im Speicher 11 für die Testfahrt mehrere Testfälle TFj gespeichert sind, dann kann es passieren, dass gleichzeitig die Startbedingungen SBj verschiedener Testfälle TFj einem aktuellen Fahrzeugzustand entsprechen. In diesem Fall können dem Testfahrer 13 alle diese Testfälle TFj angeboten werden, aus denen er einen auswählen kann, der dann gestartet und absolviert wird. Es kann aber auch sein, dass die Testfälle TFj mit einer Priorität versehen sind. Beispielsweise können wichtige Testfälle TFj oder selten vorkommende Testfälle TFj eine hohe Priorität haben und häufig vorkommende Testfälle TFj eine niedrige Priorität. Die Priorität kann aber natürlich auch nach anderen Kriterien vergeben werden. Die Priorität kann mit den Testfällen TFj in der Speichereinheit 11 gespeichert sein und ausgelesen werden. Die verschiedenen Testfälle TFj können dem Testfahrer 13 dann gemäß der Priorität sortiert angeboten werden. Das kann den Testfahrer 13 bei der Auswahl des Testfalls TFj unterstützen. Die Testeinheit 10 kann aber auch den zu absolvierenden Testfall TFj anhand der Priorität automatisch auswählen und starten, beispielsweise in dem der Testfall TFj mit der höchsten Priorität automatisch gestartet wird. Ist eine automatische Auswahl nicht möglich, kann der Testfahrer 13 eine Auswahl treffen. Die Prioritäten der Testfälle TFj können vor Beginn des Tests konfiguriert werden.

Insbesondere lassen sich damit während der Testfahrt auch sehr einfach Testfälle TFj erkennen, für die ein anderer Verkehrsteilnehmer notwendig ist, ohne diesen anderen Verkehrsteilnehmer durch ein zweites Testfahrzeug im Zuge der Durchführung des Tests simulieren zu müssen. Stattdessen wird der reale Straßenverkehr verwendet und geprüft, ob sich dabei aufgrund der aktuellen Verkehrssituation, die beispielsweise über einen Umfeldsensor erfasst werden kann, ein bestimmter Testfall TFj ergibt.

Während der Testfahrt mit dem Testfahrzeug 1 werden somit von der Testeinheit 10 anhand des Sensorsignals S und der Startbedingung SBj Testfälle TFj identifiziert, die aufgrund des aktuellen Fahrzeugzustandes (Fahrzustand und/oder Umgebungszustand) möglich wären. Während der Testfahrt können daher verschiedene Testfälle TFj absolviert werden.

Um einen möglichen, aber nicht ausgeführten Testfall TFj wieder auszublenden, kann für einen Testfall TFj auch eine Stoppbedingung definiert sein. Das kann einfach eine bestimmte Stoppzeit sein, nach der der Testfall TFj aus den möglichen zu absolvierenden Testfällen TF wieder entfernt wird. Es kann aber auch ein bestimmtes Sensorsignal S und eine damit verknüpfte, für den Testfall TFj vorgegebene Bedingung für die Stoppbedingung verwendet werden, beispielsweise ein zu großer Abstand zu einem vorausfahrenden Fahrzeug.

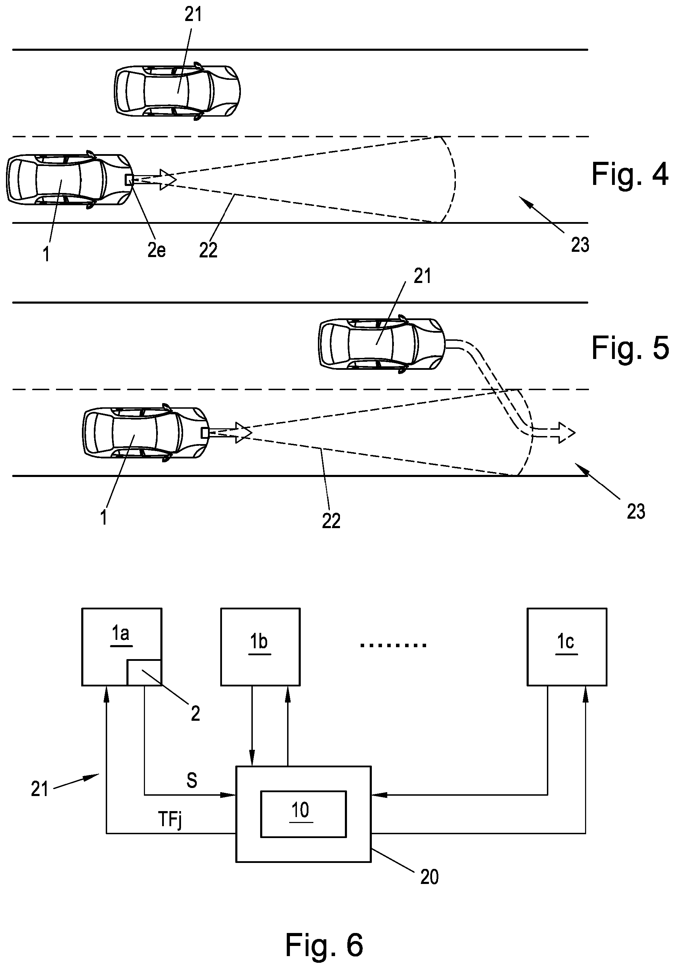

Das erfindungsgemäße Vorgehen wird anhand eines konkreten Ausführungsbeispiels mit Bezugnahme auf die Fig.4 und 5 beschrieben.

Fig.4 zeigt eine zweispurige Fahrbahn (Autobahn oder Landstraße) als Fahrstrecke 23 entlang der das Testfahrzeug 1 in Fahrtrichtung (angedeutet durch Pfeil) durch einen Testfahrer 13 bewegt wird. Am Testfahrzeug 1 ist ein Fahrzeugsensor 2, in diesem Fall eine Kombination aus Radarsensor und einer Stereokamera, angeordnet, mit einem definierten Sensorbereich 22 vor und seitlich des Testfahrzeugs 1. Der Sensorbereich 22 gibt den Bereich an, in dem der Fahrzeugsensor 2 anspricht. Der Fahrzeugsensor 2 kann beispielsweise ein Sensorsignal S für einen Abstandswarner, eine Abstandsregelung, oder eine adaptive Geschwindigkeitsregelung des Testfahrzeugs 1 liefern. Neben dem Testfahrzeug 1 fährt ein anderes Fahrzeug 21 als Verkehrsteilnehmer im normalen Straßenverkehr. In Fig.5 ist diese Verkehrssituation eine kurze Zeitspanne später dargestellt. Hier wechselt das weitere Fahrzeug 21 vor dem Testfahrzeug 1 die Fahrspur und schert auf die Fahrspur ein, auf der das Testfahrzeug 1 unterwegs ist (angedeutet durch den Pfeil in Fig.5). Gelangt das Fahrzeug 21 bei diesem Fahrmanöver in den Sensorbereich des Fahrzeugsensors 2 (Radar plus Kamera) des Testfahrzeugs 1 spricht der Fahrzeugsensor 2, und damit ein damit verknüpftes Fahrzeugassistenzsystem, an.

Damit könnte ein Testfall TF wie folgt definiert werden:

| | |
|---|---|
| Startbedingung SB: | Ein Fahrzeug gelangt in den Sensorbereich des Fahrzeugsensors des Testfahrzeugs und es war vorher kein Fahrzeug im Sensorbereich. |
| Testschritt TS1: | Beschleunigung des Testfahrzeugs, um den Abstand zwischen dem Testfahrzeug und dem vorausfahrenden Fahrzeug zu verringern, bis Abstandsregelung anspricht. |
| Testschritt TS2: | Verzögerung des Testfahrzeugs, um den Abstand zwischen dem Testfahrzeug und dem vorausfahrenden Fahrzeug zu vergrößern, bis Abstandsregelung inaktiv wird. |
| Stoppbedingung: | Abstandsregelung wird vom Testfahrer deaktiviert oder Abstandsregelung wird inaktiv oder eine definierte Zeitspanne nach Detektion der Startbedingung ist abgelaufen, ohne dass Testschritt TS1 gestartet oder beendet wurde. |

Ein solcher Testfall TF könnte noch beliebig verfeinert werden. Beispielsweise könnten Testfälle TFj unterschieden werden, indem Testfallparameter berücksichtigt werden.

Beispielsweise könnte als Testfallparameter der Abstand in dem das Fahrzeug 21 vor dem Testfahrzeug 1 die Fahrbahn wechselt, oder mit welcher Relativgeschwindigkeit sich die beiden Fahrzeug 1, 21 relativ zu einander bewegen, verwendet werden. Je nach vorliegenden Testfallparametern könnte dann ein bestimmter Testfall TFj ausgewählt werden. Dabei können auch Toleranzbereiche für bestimmte Testfallparameter, wie Abstand oder Relativgeschwindigkeit, definiert sein. Solche Toleranzbereiche können auch für die Startbedingung SBj gespeichert sein. Für die Ermittlung der Testfallparameter können auch weitere Sensorsignale anderer Fahrzeugsensoren 2 herangezogen werden.

Wenn anhand des aktuellen Sensorsignals S eine Startbedingung SBj erkannt wurde, kann daraus ein durchgeführter Testfall TFj gemacht werden, indem der Testfahrer 13 das Testfahrzeug 1 gemäß den im Testfall TFj, der der Startbedingung SBj zugeordnet ist, definierten Testschritten TSn mit den Fahranweisungen FAn steuert. Damit können sehr viele verschiedene Testfälle TFj während einer normalen Fahrt des Testfahrzeugs 1 auf einer normalen Straße mit normalem Verkehr getestet werden. Wenn überhaupt sind damit nur mehr wenige Testfälle über, die mit einem zweiten Testfahrzeug mit zweitem Testfahrer oder mit einem speziellen Testaufbau getestet werden müssen. Das vereinfacht die Durchführung von Testfahrten mit einem Testfahrzeug 1 erheblich.

Es ist auch möglich, dass das erfolgreiche Absolvieren eines Testfalls TFj vom Testfahrzeug 1 während der Testfahrt an eine definierte Testzentrale 20 übermittelt wird, wo dann bedarfsweise weitere Auswertungen möglich sind.

Verschiedene Testfälle TFj können vorab definiert werden und im Speicher 11 der Testeinheit 10 abgelegt werden. Vor der Testfahrt können auch bestimmte Testfälle TFj für die Testfahrt ausgewählt werden, beispielsweise alle Testfälle TFj die ein bestimmtes Fahrzeugassistenzsystem betreffen. Alle anderen Testfälle werden dann bei der Testfahrt nicht berücksichtigt.

Es ist auch denkbar, dass die Testeinheit 10 mit der Speichereinheit 11 nicht im Testfahrzeug 1 ist, sondern in einer Testzentrale 20, die mit dem Testfahrzeug 1 über eine Datenverbindung 21, beispielsweise eine Universal Mobile Telecommunications System (UMTS) Verbindung, in Datenkommunikation steht, angeordnet ist. Das ist beispielsweise in Fig.6 dargestellt, in der mehrere Testfahrzeuge 1a, 1b, 1c mit einer Testzentrale 20 über eine Datenverbindung verbunden sind. Die Testfahrzeuge werden in Fig.6 nur zwecks der Veranschaulichung mit Buchstaben unterschieden. In diesem Fall wird das zumindest eine Sensorsignal S des zumindest einen Fahrzeugsensors 2 über die Datenverbindung an die Testeinheit 10 übermittelt und die Startbedingung SBj wird von der zentralen Testeinheit 10 geprüft. Der Rest kann wie oben beschrieben ablaufen. Dabei kann ein von der Testeinheit 10 oder dem Testfahrer 13 ausgewählter Testfall TF mit den Testschritten TSn und Testanweisungen TAn von der Testeinheit 10 an das Testfahrzeug 1 übertragen, beispielsweise an die Nutzerschnittstelle 12 und dort zur Ausführung angezeigt werden. Dabei ist es egal, ob ein ganzer Testfall TFj übermittelt wird, oder einzelne Testschritte TSn eines Testfalls TFj. Alternativ können die Testfälle TFj auch im Testfahrzeug 1 gespeichert sein und über die Testeinheit 10 in der Testzentrale 20 aufgerufen werden.

Ein während der Durchführung des Testfalls TF aufgezeichnetes Sensorsignal S kann entweder im Testfahrzeug 1 aufgezeichnet und/oder ausgewertet werden, oder kann zur Auswertung über die Datenverbindung 21 an die zentrale Testeinheit 10 in der Testzentrale 20 übermittelt werden.

Eine zentrale Testeinheit 10 hat den Vorteil, dass damit gleichzeitig mehrere Testfahrzeuge 1 unterwegs sein können und mit der Testeinheit 10 zur Durchführung von Testfällen TFj in Datenverbindung stehen können. Damit können mehr Testfällte TFj in kürzerer Zeit absolviert werden. Die Testeinheit 10 kann dabei einem Testfahrzeug 1 auch die Anweisung geben, in einer bestimmen Umgebung zu fahren, beispielsweise in einer Stadt oder auf einer Autobahn, um damit verbundene Testfälle TFj zu provozieren, beispielsweise solche, die noch nicht erfolgreich absolviert wurden. Auf diese Weise können ganze Testflotten bestehend aus einer Mehrzahl von Testfahrzeugen 1 betrieben werden.

Während der Durchführung eines Testfalls TFj wird zumindest ein Sensorsignal S zumindest eines Fahrzeugsensors 2 erfasst. Diese Fahrzeugsensor 2 muss aber nicht derselbe Fahrzeugsensor 2 sein, der für die Startbedingung SBj des Testfalls TFj oder für eine allfällige Stoppbedingung des Testfalls TFj verwendet wurde. Anhand des während der Durchführung des Testfalls TFj zumindest einen erfassten Sensorsignals S kann anhand vorgegebener Auswertekriterien festgestellt werden, ob ein Testschritt TSn, und damit letztendlich auch der Testfall TFj, erfolgreich absolviert wurde, oder nicht. Diese Auswertung kann online während der Testfahrt erfolgen, oder auch erst nachher offline. Es ist auch möglich, gewisse Testfälle TFj online während der Testfahrt auf Erfolg auszuwerten und andere offline.

Bereits absolvierte Testfälle TFj können aus der Liste der mit der Testfahrt zu absolvierenden Testfälle auch gestrichen werden. Dabei kann auch berücksichtigt werden, wenn ein bestimmter Testfall TFj aufgrund der gewünschten Testabdeckung mehr als einmal zu absolvieren ist. Der Testfall TFj wird dann erst dann aus der Liste der durchzuführenden Testfälle gestrichen, wenn die vorgegebene Anzahl der erfolgreichen Durchführungen (was für verschiedene Testfälle auch unterschiedlich sein kann) erreicht wurde. Mit dem Streichen eines Testfalls TFj wird während der Durchführung der Testfahrt auch die Startbedingungen SBj des gestrichenen Testfalls TFj nicht mehr geprüft.

## Patentansprüche

1. Verfahren zum Durchführen einer Testfahrt mit zumindest einem Testfahrzeug (1), wobei das Testfahrzeug (1) von einem Testfahrer (13) entlang einer Fahrstrecke bewegt wird, wobei eine Mehrzahl von Testfällen (TFj) in einer Speichereinheit (11) gespeichert werden und jeder Testfall (TFj) als Abfolge von Testschritten (TSn) definiert wird, die beim Ausführen des Testfalls (TFj) vom Testfahrer (13) durchzuführen sind, und zumindest einer dieser gespeicherten Testfälle (TFj) während der Testfahrt vom Testfahrer (13) absolviert wird, **dadurch gekennzeichnet, dass** zu jedem Testfall (TFj) eine Startbedingung (SBj) in Abhängigkeit zumindest eines Sensorsignals (S) eines Fahrzeugsensors (2) des Testfahrzeugs (1) definiert und mit dem zugehörigen Testfall (TFj) in der Speichereinheit (11) gespeichert wird, wobei jede Startbedingung (SBj) einen bestimmten Fahrzeugzustand definiert, **dass** während der Testfahrt mit zumindest einem Fahrzeugsensor (2) zumindest ein Sensorsignal (S), das einen aktuellen Fahrzeugzustand repräsentiert, erfasst wird und das zumindest eine Sensorsignal (S) an eine Testeinheit (10) übermittelt wird, dass die Testeinheit (10) die Startbedingung (SBj) zumindest eines gespeicherten Testfalls (TFj) aus der Speichereinheit (11) ausliest und von der Testeinheit (10) während der Testfahrt überprüft wird, ob der zur ausgelesenen Startbedingung (SBj) gespeicherte Fahrzeugzustand und der durch das erfasste Sensorsignal (S) repräsentierte aktuelle Fahrzeugzustand übereinstimmen, **und dass** bei Übereinstimmung der Testfahrer (13) den der ausgelesenen Startbedingung (SBj) zugeordneten Testfall (TFj) absolviert, indem dieser Testfall (TFj) gestartet wird und dem Testfahrer (13) dabei die in diesem Testfall (TFj) definierten Testschritte (TSn) zur Wahrnehmung vermittelt werden und der Testfahrer (13) diese Testschritte (TSn) ausführt.

2. Verfahren nach Anspruch 1, **dadurch gekennzeichnet, dass** die Testeinheit (10) die Startbedingungen (SBj) mehrerer gespeicherter Testfälle (TFj) aus der Speichereinheit (11) ausliest und von der Testeinheit (10) während der Testfahrt überprüft wird, ob einer der zu den ausgelesenen Startbedingungen (SBj) gespeicherten Fahrzeugzustände und der durch das erfasste Sensorsignal (S) repräsentierte aktuelle Fahrzeugzustand übereinstimmen **und dass** bei Übereinstimmung der Testfahrer (13) den dieser übereinstimmenden Startbedingung (SBj) zugeordneten Testfall absolviert, indem dieser Testfall (TFj) gestartet wird und dem Testfahrer (13) die in diesem Testfall (TFj) definierten Testschritte (TSn) zur Wahrnehmung vermittelt werden und der Testfahrer (13) diese Testschritte (TSn) ausführt.

3. Verfahren nach Anspruch 1 oder 2, **dadurch gekennzeichnet, dass** bei Übereinstimmung der Testfall (TFj) automatisch von der Testeinheit (10) gestartet wird oder **dass** der Testfall (TFj) dem Testfahrer (13) von der Testeinheit (10) zur Durchführung vorgeschlagen wird und der Testfahrer (13) den Testfall (TFj) startet.

4. Verfahren nach Anspruch 1, **dadurch gekennzeichnet, dass** die Testeinheit (10) die Startbedingungen (SBj) mehrere gespeicherter Testfälle (TFj) aus der Speichereinheit (11) ausliest und von der Testeinheit (10) während der Testfahrt alle Testfälle (TFj) ermittelt werden, deren zugeordneten als Startbedingung (SBj) gespeicherten Fahrzeugzustände mit dem durch das erfasste Sensorsignal (S) repräsentierten aktuellen Fahrzeugzustand übereinstimmen **und dass** dem Testfahrer (13) von der Testeinheit (10) alle diese übereinstimmenden Testfälle (TFj) vorgeschlagen werden und vom Testfahrer (13) einer dieser Testfälle (TFj) ausgewählt und gestartet wird **und dass** der Testfahrer (13) den gestarteten Testfall (TFj) absolviert, indem dem Testfahrer (13) die im gestarteten Testfall (TFj) definierten Testschritte (TSn) zur Wahrnehmung vermittelt werden und der Testfahrer (13) diese Testschritte (TSn) ausführt.

5. Verfahren nach Anspruch 1, **dadurch gekennzeichnet, dass** die Testeinheit (10) die Startbedingungen (SBj) mehrere gespeicherter Testfälle (TFj) aus der Speichereinheit ausliest und von der Testeinheit (10) während der Testfahrt alle Testfälle (TFj) ermittelt werden, deren zugeordneten als Startbedingung (SBj) gespeicherten Fahrzeugzustände mit dem durch das erfasste Sensorsignal (S) repräsentierten aktuellen Fahrzeugzustand übereinstimmen **und dass** von der Testeinheit (10) einer der übereinstimmenden Testfälle (TFj) anhand einer vorgegebenen Priorisierung der Testfälle (TFj) ausgewählt und gestartet wird **und dass** der Testfahrer (13) den gestarteten Testfall (TFj) absolviert, indem dem Testfahrer (13) die im gestarteten Testfall (TFj) definierten Testschritte (TSn) angezeigt werden und der Testfahrer (13) diese Testschritte (TSn) ausführt.

6. Verfahren nach einem der Ansprüche 1 bis 5, **dadurch gekennzeichnet, dass** bei der Durchführung der Testfahrt ein absolvierter Testfall (TFj) nach der Absolvierung oder nach einer vorgegebenen mehrfachen Absolvierung aus der Mehrzahl von Testfällen (TFj) in der Speichereinheit (11) gestrichen wird.

7. Verfahren nach einem der Ansprüche 1 bis 6, **dadurch gekennzeichnet, dass** die Testeinheit (10) im Testfahrzeug (1) angeordnet wird.

8. Verfahren nach einem der Ansprüche 1 bis 6, **dadurch gekennzeichnet, dass** die Testeinheit (10) in einer Testzentrale (20), die mit dem Testfahrzeug (1) in Datenverbindung steht, angeordnet wird.

9. Verfahren nach Anspruch 8, **dadurch gekennzeichnet, dass** die Testeinheit (10) in der Testzentrale (20) mit zumindest einem weiteren Testfahrzeug (1) zum Durchführen einer Testfahrt in Datenverbindung steht, wobei das zumindest eine weitere Testfahrzeug (1) von einem weiteren Testfahrer (13) entlang einer Fahrstrecke bewegt wird.

10. Anordnung zum Durchführen einer Testfahrt mit zumindest einem, von einem Testfahrer (13) entlang einer Fahrstrecke bewegten Testfahrzeug (1) und mit einer Speichereinheit (11), in der eine Mehrzahl von Testfällen (TFj) gespeichert sind und jeder Testfall (TFj) als Abfolge von Testschritten (TSn) definiert ist, die der Testfahrer (13) beim Ausführen des Testfalls (TFj) durchführt, und der Testfahrer (13) zumindest einen dieser gespeicherten Testfälle (TFj) während der Testfahrt absolviert, **dadurch gekennzeichnet, dass** in der Speichereinheit (11) zu jedem Testfall (TFj) eine Startbedingung (SBj) in Abhängigkeit zumindest eines Sensorsignals (S) eines Fahrzeugsensors (2) des Testfahrzeugs (1) definiert und gespeichert ist, wobei jede Startbedingung (SBj) einen bestimmten Fahrzeugzustand definiert, **dass** am Testfahrzeug (1) zumindest ein Fahrzeugsensor (2) vorgesehen ist, der während der Testfahrt zumindest ein Sensorsignal (S), das einen aktuellen Fahrzeugzustand repräsentiert, erfasst und eine Testeinheit (10) vorgesehen ist, an die der zumindest eine Fahrzeugsensor (2) das zumindest eine Sensorsignal (S) übermittelt, **dass** die Testeinheit (10) die Startbedingung (SBj) zumindest eines gespeicherten Testfalls (TFj) aus der Speichereinheit (11) ausliest und die Testeinheit (10) während der Testfahrt überprüft, ob der zur ausgelesenen Startbedingung (SBj) gespeicherte Fahrzeugzustand und der durch das erfasste Sensorsignal (S) repräsentierte aktuelle Fahrzeugzustand übereinstimmen, **und dass** bei Übereinstimmung der der ausgelesenen Startbedingung (SBj) zugeordnete Testfall (TFj) startet und der Testfahrer (13) diesen Testfall (TFj) absolviert, indem dem Testfahrer (13) die in diesem Testfall (TFj) definierten Testschritte (TSn) an einer Nutzerschnittstelle (12) zur Wahrnehmung vermittelbar sind und der Testfahrer (13) diese Testschritte (TSn) ausführt.

11. Anordnung nach Anspruch 10, **dadurch gekennzeichnet, dass** die Testeinheit (10) im Testfahrzeug (1) angeordnet ist oder die Testeinheit (10) in einer Testzentrale (20), die mit dem Testfahrzeug (1) in Datenverbindung steht, angeordnet ist.

## Claims

1. Method for executing a test drive with at least one test vehicle (1), wherein the test vehicle (1) is moved by a test driver (13) along a travel route, wherein a plurality of test cases (TFj) are stored in a memory unit (11), and each test case (TFj) is defined as a sequence of test steps (TSn) which are to be executed by the test driver (13) while carrying out the test case (TFj), and at least one of said stored test cases (TFj) is completed by the test driver (13) during the test drive, **characterized in that,** for each test case (TFj), a start condition (SBj) is defined in dependence of at least one sensor signal (S) of a vehicle sensor (2) of the test vehicle (1) and stored in the memory unit (11) together with the associated test case (TFj), wherein each start condition (SBj) defines a particular vehicle state, **in that** at least one sensor signal (S) that represents a current vehicle state is recorded by at least one vehicle sensor (2) during the test drive, and the at least one sensor signal (S) is transmitted to a test unit (10), **in that** the test unit (10) reads out the start condition (SBj) of at least one stored test case (TFj) from the memory unit (11), and, during the test drive, the test unit (10) checks whether the vehicle state stored for the read-out start condition (SBj) and the current vehicle state represented by the recorded sensor signal (S) match, **and in that,** if said states match, the test driver (13) completes the test case (TFj) associated to the read-out start condition (SBj), **in that** said test case (TFj) is started, and the test driver (13) is provided with the test steps (TSn) defined in this test case (TFj) for attention, and the test driver (13) performs these test steps (TSn).

2. Method according to claim 1, **characterized in that** the test unit (10) reads out the start conditions (SBj) of several stored test cases (TFj) from the memory unit (11), and the test unit (10) checks, during the test drive, whether any of the vehicle states stored for the read-out start conditions (SBj) and the current vehicle state represented by the detected sensor signal (S) match, **and in that,** in the event of a match, the test driver (13) completes the test case associated with this matching start condition (SBj), **in that** said test case (TFj) is started, and the test driver (13) is provided with the test steps (TSn) defined in this test case (TFj) for attention, and the test driver (13) performs these test steps (TSn).

3. Method according to claim 1 or 2, **characterized in that,** in the case of a match, the test case (TFj) is automatically started by the test unit (10), **or in that** the test case (TFj) is proposed to the test driver (13) from the test unit (10) for execution, and the test driver (13) starts the test case (TFj).

4. Method according to claim 1, **characterized in that** the test unit (10) reads out the start conditions (SBj) of several stored test cases (TFj) from the memory unit (11), and, during the test drive, the test unit (10) determines all test cases (TFj) whose associated vehicle states stored as a start condition (SBj) match the current vehicle state represented by the detected sensor signal (S), **and in that** all of these matching test cases (TFj) are proposed to the test driver (13) by the test unit (10), and one of these test cases (TFj) is selected and started by the test driver (13), **and in that** the test driver (13) completes the started test case (TFj) **in that** the test steps (TSn) defined in the started test case (TFj) are provided to the test driver (13) for attention, and the test driver (13) performs these test steps (TSn).

5. Method according to claim 1, **characterized in that** the test unit (10) reads out the start conditions (SBj) of several stored test cases (TFj) from the memory unit (11), and, during the test drive, the test unit (10) determines all test cases (TFj) whose associated vehicle states stored as a start condition (SBj) match the current vehicle state represented by the detected sensor signal (S), **and in that** the test unit (10) selects and starts one of the matching test cases (TFj) on the basis of a predetermined prioritization of the test cases (TFj), **and in that** the test driver (13) completes the started test case (TFj) **in that** the test steps (TSn) defined in the started test case (TFj) are displayed to the test driver (13), and the test driver (13) performs these test steps (TSn).

6. Method according to one of claims 1 to 5, **characterized in that,** when carrying out the test drive, a completed test case (TFj) is deleted after completion or after a predetermined multiple completion from the plurality of test cases (TFj) in the memory unit (11).

7. Method according to one of claims 1 to 6, **characterized in that** the test unit (10) is arranged in the test vehicle (1).

8. Method according to one of claims 1 to 6, **characterized in that** the test unit (10) is arranged in a test center (20) which is in data connection with the test vehicle (1).

9. Method according to claim 8, **characterized in that** the test unit (10) in the test center (20) is in data connection with at least one further test vehicle (1) for executing a test drive, wherein the at least one further test vehicle (1) is moved along a travel route by a further test driver (13).

10. Arrangement for executing a test drive, having at least one test vehicle (1) that is moved along a travel route by a test driver (13) and having a memory unit (11) in which a plurality of test cases (TFj) are stored, and each test case (TFj) is defined as a sequence of test steps (TSn) which the test driver (13) executes when carrying out the test case (TFj), and the test driver (13) completes at least one of these stored test cases (TFj) during the test drive, **characterized in that** a start condition (SBj), depending upon at least one sensor signal (S) of a vehicle sensor (2) of the test vehicle (1), is defined and stored in the memory unit (11) for each test case (TFj), wherein each start condition (SBj) defines a specific vehicle state, **in that** at least one vehicle sensor (2) is provided on the test vehicle (1), which sensor detects at least one sensor signal (S), representing a current vehicle state, during the test drive, and a test unit (10) is provided, to which the at least one vehicle sensor (2) transmits the at least one sensor signal (S), **in that** the test unit (10) reads out the start condition (SBj) of at least one stored test case (TFj) from the memory unit (11), and the test unit (10) checks, during the test drive, whether the vehicle state stored for the read-out start condition (SBj) and the current vehicle state represented by the detected sensor signal (S) match, **and in that,** in the event of a match, the test case (TFj) assigned to the read-out start condition (SBj) starts, and the test driver (13) completes this test case (TFj) **in that** the test steps (TSn) defined in this test case (TFj) can be provided to the test driver (13) for attention on a user interface (12), and the test driver (13) carries out these test steps (TSn).

11. Arrangement according to claim 10, **characterized in that** the test unit (10) is arranged in the test vehicle (1), or the test unit (10) is arranged in a test center (20) which is in data connection with the test vehicle (1).

## Revendications

1. Procédé permettant d'exécuter un trajet de test avec au moins un véhicule de test (1), dans lequel le véhicule de test (1) est déplacé par un conducteur de test (13) le long d'un parcours, dans lequel une pluralité de cas de test (TFj) est mémorisée dans une unité de mémorisation (11) et chaque cas de test (TFj) est défini comme une séquence d'étapes de test (TSn) qui doivent être réalisées par le conducteur de test (13) lors de l'exécution du cas de test (TFj), et au moins l'un desdits cas de test (TFj) mémorisés est effectué par le conducteur de test (13) pendant le trajet de test, **caractérisé en ce que,** pour chaque cas de test (TFj), une condition de départ (SBj) est définie en fonction d'au moins un signal de capteur (S) d'un capteur de véhicule (2) du véhicule de test (1) et est mémorisée avec le cas de test (TFj) correspondant dans l'unité de mémorisation (11), dans lequel chaque condition de départ (SBj) définit un état de véhicule déterminé, **en ce que,** pendant le trajet de test, au moins un signal de capteur (S) représentant un état de véhicule actuel est détecté par au moins un capteur de véhicule (2) et l'au moins un signal de capteur (S) est transmis à une unité de test (10), **en ce que** l'unité de test (10) lit la condition de démarrage (SBj) d'au moins un cas de test (TFj) mémorisé dans l'unité de mémorisation (11) et on vérifie, au moyen de l'unité de test (10) pendant le trajet de test, si l'état de véhicule mémorisé pour la condition de départ (SBj) lue et l'état de véhicule actuel représenté par le signal de capteur (S) détecté concordent, et **en ce que**, en cas de concordance, le conducteur de test (13) effectue le cas de test (TFj) associé à la condition de départ (SBj) lue par le fait que ledit cas de test (TFj) est démarré et que les étapes de test (TSn) définies dans ledit cas de test (TFj) sont communiquées au conducteur de test (13) pour qu'il les perçoive et que le conducteur de test (13) réalise lesdites étapes de test (TSn).

2. Procédé selon la revendication 1, **caractérisé en ce que** l'unité de test (10) lit les conditions de départ (SBj) de plusieurs cas de test (TFj) mémorisés dans l'unité de mémorisation (11) et on vérifie, au moyen de l'unité de test (10) pendant le trajet de test, si l'un des états de véhicule mémorisés pour les conditions de départ (SBj) lues et l'état de véhicule actuel représenté par le signal de capteur (S) détecté concordent, **et en ce que,** en cas de concordance, le conducteur de test (13) effectue le cas de test associé à ladite condition de départ (SBj) concordante par le fait que ledit cas de test (TFj) est démarré et que les étapes de test (TSn) définies dans ledit cas de test (TFj) sont communiquées au conducteur de test (13) pour qu'il les perçoive et que le conducteur de test (13) réalise lesdites étapes de test (TSn).

3. Procédé selon la revendication 1 ou 2, **caractérisé en ce que,** en cas de concordance, le cas de test (TFj) est démarré automatiquement par l'unité de test (10) **ou en ce que** le cas de test (TFj) est proposé au conducteur de test (13) par l'unité de test (10) pour être exécuté et le conducteur de test (13) démarre le cas de test (TFj).

4. Procédé selon la revendication 1, **caractérisé en ce que** l'unité de test (10) lit les conditions de départ (SBj) de plusieurs cas de test (TFj) mémorisés dans l'unité de mémorisation (11) et sont déterminés, par l'unité de test (10) pendant le trajet de test, tous les cas de test (TFj) dont les états de véhicule associés et mémorisés en tant que condition de démarrage (Sbj) concordent avec l'état de véhicule actuel représenté par le signal de capteur (S) détecté, **et en ce que** tous lesdits cas de test (TFj) concordants sont proposés au conducteur de test (13) par l'unité de test (10) et l'un desdits cas de test (TFj) est sélectionné et démarré par le conducteur de test (13), **et en ce que** le conducteur de test (13) effectue le cas de test (TFj) démarré par le fait que les étapes de test (TSn) définies dans le cas de test (TFj) démarré sont communiquées au conducteur de test (13) pour qu'il les perçoive et que le conducteur de test (13) réalise lesdites étapes de test (TSn).

5. Procédé selon la revendication 1, **caractérisé en ce que** l'unité de test (10) lit les conditions de départ (SBj) de plusieurs cas de test (TFj) mémorisés dans l'unité de mémorisation et sont déterminés, par l'unité de test (10) pendant le trajet de test, tous les cas de test (TFj) dont les états de véhicule associés et mémorisés en tant que condition de démarrage (Sbj) concordent avec l'état de véhicule actuel représenté par le signal de capteur (S) détecté, **et en ce que** l'unité de test (10) sélectionne et démarre l'un des cas de test (TFj) concordants à l'aide d'une hiérarchisation prédéfinie des cas de test (TFj), **et en ce que** le conducteur de test (13) effectue le cas de test (TFj) démarré par le fait que les étapes de test (TSn) définies dans le cas de test (TFj) démarré sont affichées au conducteur de test (13) et que le conducteur de test (13) réalise lesdites étapes de test (TSn).

6. Procédé selon l'une des revendications 1 à 5, **caractérisé en ce que,** lors de l'exécution du trajet de test, un cas de test (TFj) effectué est supprimé de la pluralité de cas de test (TFj) dans l'unité de mémorisation (11) après avoir été effectué ou après avoir été effectué plusieurs fois de manière prédéfinie.

7. Procédé selon l'une des revendications 1 à 6, **caractérisé en ce que** l'unité de test (10) est disposée dans le véhicule de test (1).

8. Procédé selon l'une des revendications 1 à 6, **caractérisé en ce que** l'unité de test (10) est disposée dans un centre de test (20) en connexion de données avec le véhicule de test (1).

9. Procédé selon la revendication 8, **caractérisé en ce que** l'unité de test (10) dans le centre de test (20) est en connexion de données avec au moins un autre véhicule de test (1) pour exécuter un trajet de test, dans lequel l'au moins un autre véhicule de test (1) est déplacé le long d'un parcours par un autre conducteur de test (13).

10. Agencement permettant d'exécuter un trajet de test avec au moins un véhicule de test (1) déplacé le long d'un parcours par un conducteur de test (13) et comportant une unité de mémorisation (11) dans laquelle sont mémorisés une pluralité de cas de test (TFj) et chaque cas de test (TFj) est défini comme une séquence d'étapes de test (TSn) que le conducteur de test (13) exécute lors de la réalisation du cas de test (TFj), et le conducteur de test (13) effectue au moins l'un desdits cas de test (TFj) mémorisés pendant le trajet de test, **caractérisé en ce que** dans l'unité de mémorisation (11), pour chaque cas de test (TFj), une condition de démarrage (SBj) est définie et mémorisée en fonction d'au moins un signal de capteur (S) d'un capteur de véhicule (2) du véhicule de test (1), dans lequel chaque condition de démarrage (SBj) définit un état de véhicule déterminé, **en ce qu'**au moins un capteur de véhicule (2) est prévu sur le véhicule de test (1), lequel capteur de véhicule, pendant le trajet de test, détecte au moins un signal de capteur (S) qui représente un état de véhicule actuel, et une unité de test (10) est prévue, à laquelle l'au moins un capteur de véhicule (2) transmet l'au moins un signal de capteur (S), **en ce que** l'unité de test (10) lit la condition de démarrage (SBj) d'au moins un cas de test (TFj) mémorisé dans l'unité de mémorisation (11) et on vérifie, par l'unité de test (10) pendant le trajet de test, si l'état de véhicule mémorisé pour la condition de démarrage (SBj) lue et l'état de véhicule actuel représenté par le signal de capteur (S) détecté concordent, **et en ce que,** en cas de concordance, le cas de test (TFj) associé à la condition de démarrage (SBj) lue démarre et le conducteur de test (13) effectue ledit cas de test (Tfj) par le fait que les étapes de test (TSn) définies dans ledit cas de test (TFj) peuvent être transmises au conducteur de test (13) sur une interface utilisateur (12) pour qu'il les perçoive et que le conducteur de test (13) réalise lesdites étapes de test (TSn).

11. Agencement selon la revendication 10, **caractérisé en ce que** l'unité de test (10) est disposée dans le véhicule de test (1) ou l'unité de test (10) est disposée dans un centre de test (20) qui est en connexion de données avec le véhicule de test (1).
